# EUROPEAN PATENT SPECIFICATION

(11) **EP 3 619 422 B1**
(45) Date of publication and mention of the grant of the patent: **19.05.2021**
(21) Application number: 18728451.8
(22) Date of filing: 24.04.2018
(51) Int. Cl.: F03B 17/06

(54) **FLOW TURBINE FOR HYDRO POWER PLANTS**
TURBINE FÜR WASSERKRAFTWERKE
TURBINE POUR CENTRALE HYDROÉLECTRIQUE

(30) Priority: 05.05.2017 HU 1700194
(43) Date of publication of application: 11.03.2020
(73) Proprietor: Szabó, Bálint, 4225 Debrecen (HU)
(72) Inventor: Szabó, Bálint, 4225 Debrecen (HU)
(86) International application number: PCT/IB2018/052835
(87) International publication number: WO 2018/203183

(56) References cited:
- WO-A1-93/03277
- WO-A1-2004/074680
- DE-A1-102012 100 118
- FR-A1- 2 475 144
- GB-A- 2 470 020
- US-A1- 2010 284 808

## Description

The invention relates to a flow turbine for hydro power plants, which converts the energy of flowing water into electric energy, and which comprises turbine blades arranged in parallel with a main shaft, and the surface of the turbine blades is always perpendicular to the direction of flow, and the edges of the turbine blades are always vertical when they immerse into the water and leave the water, resulting in the rotation of the main shaft at a high rpm and thereby providing a turbine operating with high efficiency.

One of the major groups of energy conversion devices includes equipment using the energy of water, as a renewable energy source. The energy of water is utilized most commonly by hydro power plants built on rivers, by damming the river and channelling the falling water to turbine blades. Although the kinetic energy of falling water can be converted into electric energy with high efficiency, only through a massive and permanent transformation of the environment, which, moreover, is a very costly solution.

Recognizing the disadvantage of this type of solutions, there are solutions that take into consideration the environmental factors and do not adapt the environment to the goal to be achieved, but look for solutions where the equipment is adapted to the environment, including e.g. the utilization of low-speed water flows for energy production. Hungarian patent application No. P1000320 relates to such a solution, disclosing an energy conversion device suitable for converting the flow energy of media with different flow rates in a closed flow space into alternating kinetic energy, and thereby it can be used for energy generation with good efficiency.

US Patent No. 5324169 relates to an energy harvester for power production from low velocity fluid flow. The equipment includes a lateral support arm assembly extending from a vertical drive shaft, a power blade is pivotally secured to the distal end of the support arm, and constrained to pivot within a defined operating angle. The essence of the solution is that the oscillation of the lateral support arms is continuous.

German Patent No. DE42165531 relates to a rotor with one or more rotor blades. The rotor blades are coupled by rotor blade shafts to rotor gears, which are rotatably fixed to a carrier. A non-rotating guide gear is also fixed to the carrier, the centre of which is the axis of rotation. There are auxiliary gears between the rotor gears and the guide gear.

European Patent No. EP1966485 relates to a device and system for producing regenerative and renewable hydraulic energy. The device according to the invention comprises at least one generator for producing electric energy, and a drive shaft which is connected to the generator and which comprises a plurality of blades that extend at least partially into the passing water and are set rotating by the water. Said blades are offset in relation to each other and along the drive shaft.

Patent application No. P0900242 discloses an apparatus using the kinetic energy of the upper quarter of the waves of flowing water. The invention relates to a power generation apparatus with a double or multiple spiral rotor, comprising a slanted support bracket fixed to the surface limiting the flowing medium, which includes an energy conversion device, a pump or a generator. One or more double or multiple spiral rotors, with a shaft capable of floating on the surface of or in the water, are connected to the support bracket, to a flexible short shaft attached to an axial bearing built into the end thereof at a fixed height. For the utilization of wave energy, the height of the axial bearing built into the end of the support bracket is in the upper, appropriate range of the waves moving in one direction, while the one or more rotor members, by means of their shaft capable of floating, float and rotate in this wave range with high kinetic energy.

European Patent No. EP2521855 relates to a water wheel for generating power by means of associated generators. The water wheel comprises transversely extending water paddles arranged in the form of a ring, which can be acted upon by water fed in in a flowing or free-falling manner, and the water paddles are arranged between wheel rims which are formed as outer delimitations. Said wheel rims are each connected via spokes to an axle journal. The individual water paddles are formed from identically constructed elements of rigid design, and are associated, on the outer sides, with the lateral rims of the water wheel.

The GB2470020A patent application discloses a paddle wheel having paddles which are able to rotate with respect to a rotating support member, e.g. so that they remain vertical throughout rotation of the support member. Orientation of the paddles may be controlled by sprockets, or by gears, or the paddles may be weighted. The blades may have a flat face, and the wheel may be supported to float at the water surface. The wheel may be connected to a generator for electrical power generation, and may be mounted for vertical sliding movement with respect to posts.

The WO/2004/074680 international patent application discloses a rotary drive structure having a central shaft linked by drive members to individual shafts of vanelike blades whose rotational axes are located in symmetry around a circle centred on said central shaft, the drive members being arranged such that each blade rotate in one direction as the array of blades rotates around said circle in the opposite direction, each of the blades having a crosssectional line of elongation which at all times, during rotation, will point to or through a single fixed reference point lying on said circle.

The drive members are cog wheel or crown and pinion linkages between the central shaft and the individual shafts. Further the drive members include cog wheels on the shafts and intermediate idler cog wheels between the cog wheel on the central shaft and those on the individual shafts.

The US2010284808A1 patent application disloses a waterwheel apparatus having solar-planetary type blades and a solar-planetary type blade assembly thereof are provided. The waterwheel apparatus having solar-planetary type blades includes a frame, at least one solar-planetary type blade assembly, and a power unit. The solar-planetary type blade assembly is fixed to the frame. The solar-planetary type blade assembly includes a rotating disk, a central fixed portion, a plurality of blades, and a transmission mechanism. The rotating disk is capable of rotating relative to the central fixed portion. The blades are pivoted to the rotating disk, and capable of rotating relative to the rotating disk. The transmission mechanism is located between the rotating disk and the central fixed portion for transmitting power between the rotating disk and the central fixed portion, so that the blades can spin and also revolve around the central fixed portion. The power unit has an axle center, and the axle center rotates together with the rotating disk.

A disadvantage of the above solutions is that the blades touch the water with a smaller or larger part of their surface, that is they are not vertical when they immerse into the water or leave the water, thereby reducing the torque of the shaft, and the efficiency of the turbine.

None of the solutions disclosed in these documents could implement a solution where there are eight blade gears, eight turning gears and one stationary gear, and all eight blades are always vertical when they immerse into the water and leave the water.

The aim of the invention is, by eliminating the above disadvantages, to develop a flow turbine capable of highly efficient operation, even in shallow water at low flow rates (of less than 5 km/h), that is simple to install, without a need for adapting the environment.

The idea of the invention is based on the recognition that if the edges of the turbine blades arranged perpendicular to the direction of water flow are always vertical when they immerse into the water, and always vertical when they leave the water, then the blades can be immersed into the flowing water and leave the water with the lowest resistance, the blades encounter minimum resistance, and if the blades are also vertical while turning, the whole surface of the blades can be acted upon by the flowing water, providing a turbine operating with high efficiency.

The task to be solved, that is ensuring that the turbine blades are always vertical when they immerse into the water and when they leave the water, and also while turning, and that the blades are always perpendicular to the direction of water flow, that is the whole surface of the blades in the water can be acted upon by the flowing water, thereby causing the main shaft to reach a high rpm, is implemented by means of a gear system.

Thus, the invention relates to a flow turbine that comprises a main shaft fixed firmly in the centre of two rotating circular bodies. The middle part of the main shaft is located between the two rotating circular bodies, perpendicular to them, and the two ends of the main shaft extend beyond the rotating circular bodies.

Between the rotating circular bodies turbine blades are arranged symmetrically around the main shaft, each turbine blade is mounted on a blade shaft, and the blade shafts are connected by bearings to the outer side of the rotating circular bodies. The blade shafts are parallel with the main shaft, and are perpendicular to the rotating circular bodies. The turbine blades are rectangular, of the same dimensions, their dimensions are such that two adjacent turbine blades can turn under and above each other.

Each blade shaft is connected to a blade gear on the outer side of one of the rotating circular bodies, but the blade gears are not in contact with the surface of the rotating circular body. The diameter of the blade gears corresponds to the width of the turbine blades. In the centre of this rotating circular body there is a stationary gear, the distance of the stationary gear from the rotating circular body and that of the blade gears are the same. The stationary gear and the blade gears are of the same size and have the same number of teeth. The stationary gear, with the main shaft extending through the centre thereof, is not fixed to the rotating circular body, but to a fixing element, and the fixing element holds the stationary gear firmly in the centre of the rotating circular body, and is connected to a supporting structure.

There are turning gears between the blade gears and the stationary gear, and they are fixed to the rotating circular body by bearings.

The two ends of the main shaft are connected to a bearing housing on each side, fixed to the supporting structure having horizontal surfaces. The end of the main shaft closer to the stationary gear is connected to a driving gear, and through that to a generator.

The supporting structure, which holds the flow turbine at the appropriate height above the water level, is fixed either to a floating platform or to a concrete pillar. In a preferred embodiment, 17 gears are mounted on the outer side of one of the rotating circular bodies: eight blade gears, eight turning gears and one stationary gear. Accordingly, the flow turbine has eight turbine blades.

Preferably, the part of the main shaft located between the rotating circular bodies is inside a stiffening cylinder, and the stiffening cylinder is connected to the rotating circular bodies.

In the solution according to the invention the blade gears serve as a keyway, ensuring that the blade gears turn together with the turbine blades. The (smaller) turning gears, mounted between the blade gears and the stationary gear that are of the same size and have the same number of teeth, ensure that the turbine blades are always in a vertical position.

The invention will be described in detail with reference to the following figures.
Figure 1 shows a front view of the flow turbine according to the invention.
Figure 2 shows a side view of the flow turbine according to the invention.

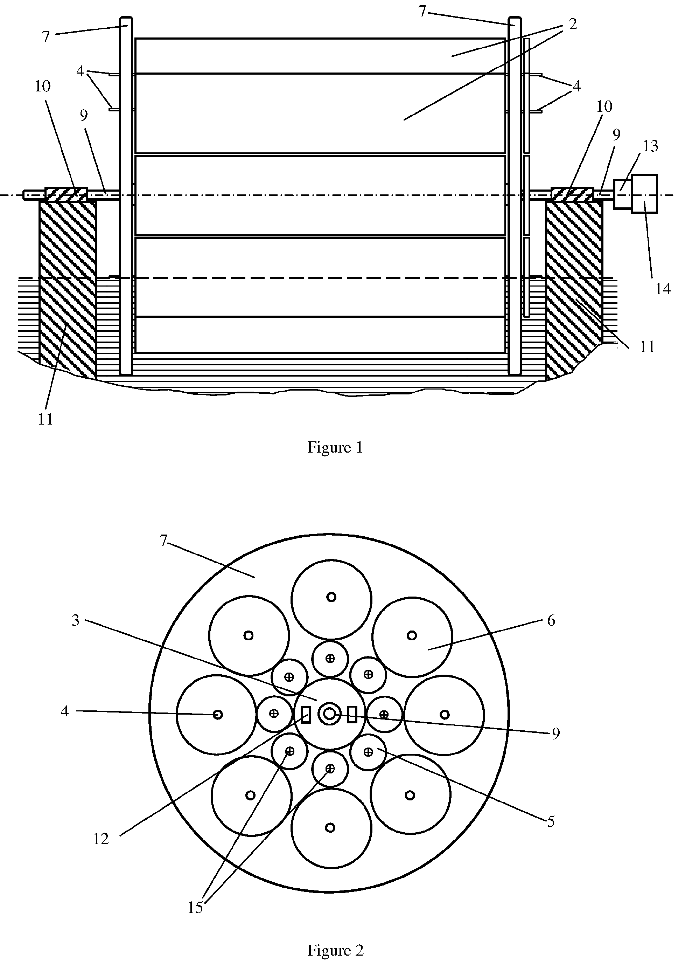

Figure 1 shows a flow turbine immersed in water. The main shaft 9 of the flow turbine is located between two rotating circular bodies 7, in the centre thereof. The two ends of the main shaft 9, extending beyond the rotating circular bodies 7, are connected to a bearing housing 10 on each side, fixed to a supporting structure 11 having horizontal surfaces. The turbine blades 2 are located between the two rotating circular bodies 7. Each turbine blade 2 is mounted on a blade shaft 4, the blade shafts 4 extend beyond the rotating circular body 7, and are connected by bearings to the outer side thereof. The blade shafts 4 of the turbine blades 2 are parallel with each other and the main shaft 9, and are arranged symmetrically around the main shaft 9, and the turbine blades 2 are dimensioned in such a manner that they can turn above and under each other, they are rectangular, and their edges are directly next to the inner surface of the rotating circular bodies 7. The figure shows the whole surface of three turbine blades 2, while the turbine blades 2 at the bottom and at the top are shown only partially. It can be seen that the turbine blades 2 are perpendicular to the direction of water flow 16.

One end of the main shaft 9 is connected to a driving gear 13, and the driving gear 13 is connected to a generator 14.

The figure shows the blade gears 6 connected to the blade shafts 4 by bearings on the outer side of the rotating circular body 7 closer to the generator 14.

Figure 2 shows the side of the rotating circular body 7 where the gears of the flow turbine can be seen. The blade gears 6 are located symmetrically near the edge of the rotating circular body 7. The blade gears 6 are connected to the blade shafts 4 in such a way that they are free to rotate relative to the rotating circular body 7. The stationary gear 3, which is of the same size as the blade gears 6, is located in the centre, and the main shaft 9 is in the centre of the stationary gear 3, extending beyond it. There are turning gears 5 between the stationary gear 3 and the blade gears 6, which are rotatably fixed to the rotating circular body 7 by bearings 15.

The stationary gear 3, which is in the same plane as the blade gears 6, is not fixed to the rotating circular body, but it is held firmly by fixing elements 12, and the fixing elements 12 are connected to a supporting structure 11 (not shown in the figure).

Preferably, the part of the main shaft 9 located between the rotating circular bodies 7 is inside a stiffening cylinder, and the stiffening cylinder is fixed to the rotating circular bodies 7.

In a preferred embodiment, the solution according to the invention comprises eight turbine blades 2 arranged between the two rotating circular bodies 7, each of which is mounted on a blade shaft 4. The blade shafts 4 are parallel with the main shaft 9, and are arranged symmetrically around the main shaft 9. The blade shafts 4 are fixed to the rotating circular bodies 7, and on the outer side of one of the rotating circular bodies 7 they are connected to blade gears 6. There is a stationary gear 3 in the centre of this rotating circular body 7, which is not fixed to, not in contact with the rotating circular body 7, but is held firmly by a fixing element 12. The blade gears 6 and the stationary gear 3 are of the same size and have the same number of teeth, and their diameter corresponds to the width of the turbine blades 2. There are eight turning gears 5 between the blade gears 6 and the stationary gear 3, which are fixed to the rotating circular body 7. The two ends of the main shaft 9, extending beyond the rotating circular bodies 7, are connected to a supporting structure 11, and the supporting structure 11 is fixed either to a floating platform or to a concrete pillar. The end of the main shaft 9 closer to the gears is connected to a driving gear 13 and a generator 14.

The size of the flow turbine according to the invention shall be designed according to the location of use, and the parameters thereof. In shallow streams the part of the turbine according to the invention immersed in water can be 20-30 cm, while in deep rivers it can be 2-4 m.

The custom designed flow turbine according to the invention shall be installed at the selected location perpendicular to the direction of water flow. Before putting the flow turbine into the water, it is advisable to install a driftwood deflector in the flow area, preferably a net stretched in the form of a V, which is important for both the turbine and the environment. This way the driftwood, logs, plant parts floating in the water can be prevented from getting between the turbine blades. Then the flow turbine can be installed in such a way that the supporting structure, to which the flow turbine is connected, is fixed to a commonly used floating platform, or to a concrete pillar, by means of a pulley system. The flow turbine shall be immersed into the water to about one third of its height, to be more precise, the immersion depth should correspond to the width of minimum one, maximum 1.5 turbine blades. As soon as the turbine blades are immersed into the water, they start to rotate, first in idle, then under load. The turbine blades start to rotate due to the flowing water, the rotating turbine blades transmit their torque to the rotating circular bodies, which are fixedly connected to the main shaft. The always vertical blades cause the main shaft to rotate at a high rpm, thereby the turbine can be operated with high efficiency.

The turbine blades rotate and turn separately from the rotating circular body. The turbine blade turns around its own blade shaft in the opposite direction than the rotating circular body around its own shaft, this is due to the stationary gear and the turning gears, and this ensures that the turbine blades are always vertical. Thus the main shaft can rotate at a high rpm, and can continuously provide a high torque. The transmission of the torque from the main shaft to the driving gear and to the generator is implemented by a prior art method.

## Claims

1. A flow turbine for hydro power plants, which converts the energy of flowing water into electric energy, and which comprises a main shaft (9) fixed to two rotating circular bodies (7), and the main shaft (9) passes through the centre of the rotating circular bodies (7) and extends beyond them, the ends of the main shaft (9) extending beyond the rotating circular bodies (7) are connected to a supporting structure (11), and one end of the main shaft (9) is connected to a driving gear (13), and through that to a generator (14);
which further comprises eight rectangular turbine blades (2) mounted on blade shafts (4), where the blade shafts (4) are between the rotating circular bodies (7), and are connected to the rotating circular bodies (7), in parallel with the main shaft (9) and arranged symmetrically around it;
and which further comprises eight blade gears (6), a stationary gear (3) and turning gears (5), in such a way that each blade gear (6) is rotatably connected to the end of a blade shaft (4) on the outer side of the rotating circular body (7) closer to the generator_ (14);
the turning gears (5) are between the blade gears (6) and the stationary gear (3), and the turning gears (5) are fixed to the rotating circular body (7),
the diameter of the blade gears (6) corresponds to the width of the turbine blades (2),
the stationary gear (3) in the centre of the rotating circular body (7) and the blade gears (6) are of the same size and have the same number of teeth,
**characterized in that** it comprises eight turning gears (5), and the diameter of the turning gears (5) is smaller than the diameter of the blade gears (6) and the stationary gear (3) of the same size, and between the rotating circular bodies (7) the main shaft (9) is inside a stiffening cylinder fixed to the rotating circular bodies (7).

## Patentansprüche

1. Eine Turbine für Wasserkraftwerke, die Energie des strömenden Wassers in elektrische Energie umwandelt und eine Hauptwelle (9) umfasst, die an zwei rotierenden kreisrunden Körpern (7) befestigt ist. Die Hauptwelle (9) verläuft durch die Mitte der rotierenden kreisrunden Körper (7) und geht über sie hinaus, die Enden der Hauptwelle (9), die sich über die rotierenden kreisförmigen Körper (7) hinaus gehen, sind mit einer Tragkonstruktion (11) verbunden, und ein Ende der Hauptwelle (9) ist mit einem Antriebsrad (13) und dadurch mit einem Generator (14) verbunden;
der weitere acht rechteckige Beschaufelungen (2) umfasst, die auf Messerwellen (4) angebracht sind, wobei Messerwellen (4) zwischen den rotierenden kreisrunden Körpern (7) liegen und mit den rotierenden kreisrunden Körpern (7) parallel zur Hauptwelle (9) verbunden und symmetrisch um diese angeordnet sind;
und der weitere acht Blatt-Zahnkranze (6), ein Stationäre Getriebe (3) und Drehvorrichtungen (5) umfasst, dass jeder Blatt-Zahnkranz (6) drehbar mit dem Ende einer Messerwelle (4) an der Außenseite der rotierenden kreisrunden Körper (7) näher am Generator (14) verbunden ist;
die Drehvorrichtungen (5) legen zwischen die Blatt-Zahnkranze (6) und das Stationäre Getriebe (3), und die Drehvorrichtungen (5) sind am rotierenden kreisrunden Körper (7) befestigt;
der Durchmesser der Blatt-Zahnkranze (6) entspricht der Breite der Beschaufelungen (2), des Stationären Getriebes (3) in der Mitte des rotierenden kreisrunden Körpers (7) und die Blatt-Zahnkranze (6) sind gleich groß und haben die gleiche Anzahl von Zähnen,
**dadurch gekennzeichnet, dass** es acht Drehvorrichtungen (5) umfasst und der Durchmesser der Drehvorrichtungen (5) kleiner ist als der Durchmesser der Blatt-Zahnkranze (6) und des stationären Getriebes (3) der gleichen Größe, und zwischen den rotierenden kreisrunden Körpern (7) befindet sich die Hauptwelle (9) in einem Versteifungszylinder, der an den rotierenden kreisrunden Körpern (7) befestigt ist.

## Revendications

1. Une turbine pour centrales hydroélectriques qui convertit l'énergie de l'eau courante en énergie électrique, et qui comprend un arbre principal (9) fixé à deux corps circulaires tournants (7), et l'arbre principal (9) passe par le centre des corps circulaires tournants (7) et s'étend au-delà de ces derniers, les extrémités de l'arbre principal (9) s'étendant au-delà des corps circulaires tournants (7) sont reliées à une structure de soutien (11), et une extrémité de l'arbre principal (9) est reliée à un engrenage de conduite (13), et par ce dernier, à un générateur (14);
qui comprend en outre huit pales de turbine rectangulaires (2) montées sur des arbres (4), où les arbres de lame (4) se trouvent entre les corps circulaires tournants (7) et sont reliés aux corps circulaires tournants (7), parallèlement à l'arbre principal (9) et disposés symétriquement autour de ce dernier;
et qui comprend en outre huit engrenages de lame (6), un engrenage stationnaire (3) et des engrenages rotatifs (5), de telle sorte que chaque engrenage de lame (6) soit relié de façon rotative à l'extrémité d'un arbre de lame (4) sur le côté extérieur du corps circulaire tournant (7) plus près du générateur (14),
les engrenages rotatifs (5) se trouvent entre les engrenages de lame (6) et l'engrenage stationnaire (3), et les engrenages tournants (5) sont fixés au corps circulaire tournant (7),
le diamètre des engrenages de lame (6) correspond à la largeur des pales de turbine (2), l'engrenage stationnaire (3) au centre du corps circulaire tournant (7) et les engrenages de lame (6) sont de la même taille et ont le même nombre de dents,
**caractérisé en ce qu'**il comprend huit engrenages tournants (5), et le diamètre des engrenages tournants (5) est inférieur au diamètre des engrenages de lame (6) et de l'engrenage stationnaire (3) de la même taille, et entre les corps circulaires rotatifs (7) l'arbre principal (9) est à l'intérieur d'un cylindre de raidissement fixé aux corps circulaires tournants (7).
